# EUROPÄISCHE PATENTSCHRIFT

(11) **EP 2 941 313 B1**
(45) Veröffentlichungstag und Bekanntmachung des Hinweises auf die Patenterteilung: **22.03.2017**
(21) Anmeldenummer: 14765865.2
(22) Anmeldetag: 22.08.2014
(51) Int. Cl.: B01D 46/00, B01D 46/42

(54) **ANSCHLIESSVORRICHTUNG**
CONNECTING DEVICE
DISPOSITIF DE RACCORDEMENT

(30) Priorität: 07.11.2013 DE 102013018614
(43) Veröffentlichungstag der Anmeldung: 11.11.2015
(73) Patentinhaber: Kemper, Gerhard, 48691 Vreden Yes (DE)
(72) Erfinder: Kemper, Gerhard, 48691 Vreden Yes (DE)
(74) Vertreter: Cohausz Hannig Borkowski Wißgott
(86) Internationale Anmeldenummer: PCT/EP2014/002309
(87) Internationale Veröffentlichungsnummer: WO 2015/067329

(56) Entgegenhaltungen:
- DE-U1- 8 802 810

## Beschreibung

Die Erfindung betrifft eine Vorrichtung zum Anschließen eines Einwegfilters an eine Feinstaub führende Eingangsleitung eines Filtergerätes.
Es ist bekannt, in Filtergeräten Einwegfilter einzusetzen die, nachdem sie gefüllt sind, ausgewechselt werden. Bei der Entnahme und dem Verschließen des Einwegfilters kommt es leicht zu einer gesundheitsschädlichen Kontaminierung der den Filterwechsel ausführenden Person durch Feinstaub.

DE 88 02 810 U1 offenbart eine Vorrichtung zur Reinigung verstrahlter, verseuchter oder vergifteter Luft vor deren Eintritt in gegen die Außenluft abgeschlossene Schutzräume mittels eines stirnseitig mit je einer Luftdurchtrittsöffnung ausgestatteten Filters.Die Luftdurchtrittöffnungen des Filters sind mittels je einer aus Aluminiumblech oder dgl. bestehenden Verschlussfolie Luft-und wasserdicht verschlossen und im Gehäuse ist eine von außen betätigbare Öffnungsvorrichtung für die Verschlussfolien vorhanden, die mit zwei Stempeln ausgestattet ist, von denen der eine der eintrittseitigen und der andere der austrittzeitigen Verschlussfolie zugeordnet ist und die in Außerbetriebstellung im Abstand von der zugehörigen Verschlussfolie gehaltert sind und in Betriebsstellung in Richtung auf die zugehörige Verschlussfolie verschiebbar sind, derart, dass die Verschlussfolien durchstoßen werden und der Luftdurchtritt durch das Filter freigegeben wird.

Aufgabe der Erfindung ist es, eine Vorrichtung zum Anschließen eines beladenen Einwegfilters an eine Feinstaub führende Leitung eines Filtergerätes zu schaffen, ohne die Bedienungsperson oder die Umgebung zu kontaminieren.

Diese Aufgabe wird erfindungsgemäß dadurch gelöst, dass ein an die Leitung angeschlossenes, die Leitung verlängerndes Eintauchrohr, das in Richtung seiner insbesondere senkrechten Achse höhenverstellbar ist und an seiner Unterseite eine Schneidkante aufweist zum Durchschneiden einer, den Filterinnenraum insbesondere die obere Filteröffnung abdeckenden Fläche insbesondere Folie oder Membran, wobei das Eintauchrohr in seiner unteren Stellung zumindest über einen Teil seiner Länge im Filterinnenraum einliegt und in seiner oberen Stellung sich außerhalb des Filters befindet, so dass der Filter auswechselbar ist.

Eine solche Vorrichtung lässt ein kontaminationsfreies Wechseln eines Feinstaub enthaltenden Filters in einem Filtergerät zu. Hierbei ist die Vorrichtung leicht zu handhaben und von einfacher Konstruktion. Auch besitzt die Vorrichtung insbesondere in ihrer Höhe geringe Außenabmessungen.

Vorteilhafte Ausgestaltungen der Erfindung sind in den Unteransprüchen aufgeführt. Besonders vorteilhaft ist ein Verfahren zum Verwendung der erfindungsgemäßen Vorrichtung, bei der nach dem Herausziehen des Eintauchrohrs aus der oberen Filteröffnung die Filteröffnung durch einen Aufkleber verschlossen wird.

Ein Ausführungsbeispiel der Erfindung ist in den Zeichnungen dargestellt und wird im Folgenden näher beschrieben. Es zeigen
- Figur 1: eine Seitenansicht der Vorrichtung;
- Figur 2: eine Draufsicht auf die Vorrichtung;
- Figur 3: einen senkrechten Schnitt B-B in Figur 2 und
- Figur 4: eine zweite Seitenansicht.

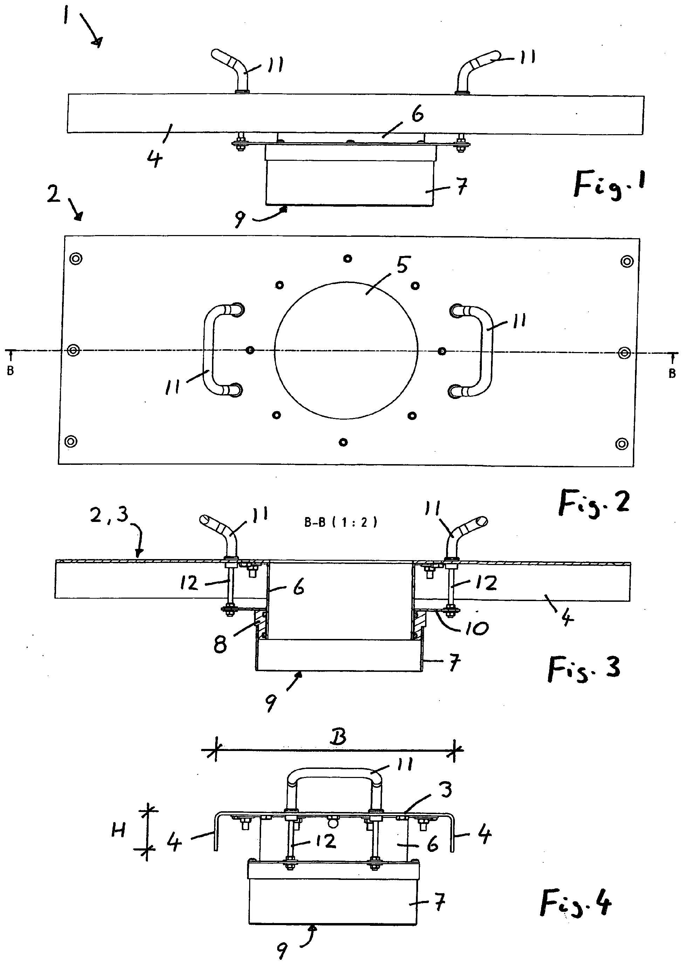

Die erfindungsgemäße Anschließvorrichtung 1 befindet sich im oberen Bereich eines Filtergerätes in dem ein Einwegfilter seitlich einschiebbar ist. Hierbei besitzt die Anschließvorrichtung 1 eine obere waagerechte Abdeckfläche 2 aus einem im senkrechten Schnitt U-förmig gekanteten Blech mit einer oberen Fläche 3 und seitlich nach unten stehenden Schenkeln 4 auf beiden Längsseiten. Hierbei ist die Breite B der Fläche 3 größer als die Höhe H der Schenkel 4, wie dies in Figur 4 dargestellt ist.

In der waagerechten Fläche 3 befindet sich mittig eine kreisförmige Öffnung 5 unter der ein Rohrstück 6 mittig und senkrecht befestigt insbesondere angeschraubt ist. In dieses Rohrstück 6 ist von oben eine Feinstaubführende Eingangsleitung lösbar befestigbar, durch die Feinstaub zu dem Einwegfilter gelangt.

Auf dem Rohrstück 6 ist außen ein Eintauchrohr 7 koaxial abgedichtet und in seiner senkrechten Achse höhenverstellbar gelagert. Hierzu besitzt das Eintauchrohr 7 eine obere koaxiale Führungsbuchse 8, bzw. einen Führungsring, der mit mindestens einem Abdichtungsring an der Außenseite des Rohrstückes 6 anliegt. Das Eintauchrohr 7 besitzt an seiner unteren Kante 9 eine Schneidkante, um eine die Eingangsöffnung des Einwegfilters abdeckende Fläche insbesondere eine Folie oder Membran durchschneiden zu können, wenn es nach unten geschoben wird. Das Eintauchrohr 7 ist am Rohrstück 6 auf und ab verschieblich gelagert, wobei in den Zeichnungen das Eintauchrohr in seiner unteren Stellung dargestellt ist.

Am oberen Ende und in der Ausführung an dem oberen Ende der Führungsbuchse 8 des Eintauchrohrs 7 ist eine waagerechte koaxiale Ringfläche 10 befestigt, an deren äußeren Rand auf diametral gegenüberliegenden Seiten jeweils eine Handhabe 11 (Handgriff) befestigt ist, die über Führungsstangen 12 mit der Ringfläche 10 verbunden sind, so dass bei einem Anheben beider Handhaben 11 das Eintauchrohr 7 angehoben wird. In der angehobenen Stellung kann ein Einwegfilter unter das Eintauchrohr in der Weise eingeschoben werden, dass das Eintauchrohr 7 sich über der Eingangsöffnung des Einwegfilters befindet, wobei die Eingangsöffnung des Einwegfilters durch die Fläche insbesondere Folie oder Membran verschlossen ist.

Wird das Eintauchrohr 7 durch die Handhaben 11 nach unten verschoben, so schneidet die Schneidkante 9 in die Fläche/Folie/Membran der Eingangsöffnung des Einwegfilters ein, wobei dann die Fläche/Folie/Membran das Eintauchrohr 7 außen dichtend umgibt.

Sobald der Einwegfilter gefüllt ist wird durch die Handhaben das Eintauchrohr 7 nach oben gezogen aus der oberen Filteröffnung heraus. Vor oder nach der Herausnahme des Einwegfilters kann dann die obere Filteröffnung durch einen Aufkleber dicht verschlossen werden.

## Patentansprüche

1. Vorrichtung (1) zum Anschließen eines Einwegfilters an eine Feinstaub führende Eingangsleitung eines Filtergerätes, **gekennzeichnet durch** ein an die Leitung angeschossenes, die Leitung verlängerndes Eintauchrohr (7), das in Richtung seiner insbesondere senkrechten Achse höhenverstellbar ist und an seiner Unterseite eine Schneidkante (9) aufweist zum Durchschneiden einer, den Filterinnenraum insbesondere die obere Filteröffnung abdeckenden Fläche insbesondere Folie oder Membran, wobei das Eintauchrohr (7) in seiner unteren Stellung zumindest über einen Teil seiner Länge im Filterinnenraum einliegt und in seiner oberen Stellung sich außerhalb des Filters befindet, so dass der Filter auswechselbar ist.

2. Vorrichtung nach Anspruch **1,dadurch gekennzeichnet, dass** das Filtergerät eine obere waagerechte Abdeckfläche (2) aufweist, die von mindestens einer Handhabe (11) durchdrungen ist, die an dem Eintauchrohr (7) befestigt ist zur Höhenverstellung des Eintauchrohrs von Hand.

3. Vorrichtung nach Anspruch 1 oder 2, **dadurch gekennzeichnet, dass** die den Feinstaub führende Leitung an ihrem unteren Ende ein Rohrstück (6) bildet, auf dem das Eintauchrohr (7) höhenverschieblich und abgedichtet gelagert ist.

4. Vorrichtung nach Anspruch 2 oder 3, **dadurch gekennzeichnet, dass** am Eintauchrohr (7) ein Teil (10) insbesondere in Ringform außen vorsteht, an dem die Handhabe(n) (11) mit ihrem unteren Ende befestigt ist/sind.

5. Vorrichtung nach einem der Ansprüche 2 bis 4, **dadurch gekennzeichnet, dass** zwei Handhaben (11) auf diametral gegenüberliegenden Seiten am Eintauchrohr (7) insbesondere am vorspringenden Teil (10) befestigt sind.

6. Vorrichtung nach einem der Ansprüche 2 bis 5, **dadurch gekennzeichnet, dass** jede Handhabe (11) als Handgriff über zwei senkrechte Führungsstangen (12) mit dem Eintauchrohr (7) verbunden ist.

7. Vorrichtung nach Anspruch 6, **dadurch gekennzeichnet, dass** jede Führungsstange in der Abdeckfläche (2) gleitend gelagert ist.

8. Vorrichtung nach einem der Ansprüche 2 bis 7, **dadurch gekennzeichnet, dass** die Abdeckfläche (2) ein im senkrechten Schnitt U-förmig gekantetes Blech ist mit einer oberen Fläche (3) und seitlich nach unten stehenden Schenkeln (4), wobei die Breite (B) der Fläche (3) größer ist als die Höhe (H) der Schenkel (4).

9. Verfahren zum Verwenden einer Vorrichtung nach einem der vorherigen Ansprüche, **dadurch gekennzeichnet, dass** nach dem Herausziehen des Eintauchrohrs (7) aus der oberen Filteröffnung die Filteröffnung durch einen Aufkleber verschlossen wird.

## Claims

1. Device (1) for connecting a disposable filter to a fine-dust-conducting inlet conduit of a filter device, **characterized by** an immersion pipe (7) which is connected to the conduit, extends the conduit and is height-adjustable in the direction of its in particular vertical axis and, on its lower side, has a cutting edge (9) for cutting through a surface, in particular film or membrane, covering the filter interior, in particular the upper filter opening, wherein the immersion pipe (7) in its lower position lies at least over part of its length in the filter interior and in its upper position is located outside the filter, and therefore the filter is exchangeable.

2. Device according to Claim 1, **characterized in that** the filter device has an upper horizontal covering surface (2) which is penetrated by at least one handle (11) which is fastened to the immersion pipe (7) for adjusting the height of the immersion pipe by hand.

3. Device according to Claim 1 or 2, **characterized in that** the fine-dust-conducting conduit at its lower end forms a pipe segment (6) on which the immersion pipe (7) is mounted in a height-displaceable and sealed manner.

4. Device according to Claim 2 or 3, **characterized in that** a part (10) to which the handle(s) (11) is/are fastened by its (their) lower end protrudes, in particular in an annular shape, on the outside of the immersion pipe (7).

5. Device according to one of Claims 2 to 4, **characterized in that** two handles (11) are fastened on diametrically opposite sides to the immersion pipe (7), in particular to the projecting part (10).

6. Device according to one of Claims 2 to 5, **characterized in that** each handle (11) is connected as a hand grip to the immersion pipe (7) via two vertical guide rods (12).

7. Device according to Claim 6, **characterized in that** each guide rod is mounted in a sliding manner in the covering surface (2).

8. Device according to one of Claims 2 to 7, **characterized in that** the covering surface (2) is a metal sheet which is angled in a U-shaped manner in the vertical section and has an upper surface (3) and laterally downwardly standing limbs (4), wherein the width (B) of the surface (3) is greater than the height (H) of the limbs (4).

9. Method for using a device according to one of the preceding claims, **characterized in that**, after the immersion pipe (7) is pulled out of the upper filter opening, the filter opening is closed by a sticker.

## Revendications

1. Dispositif (1) pour le raccordement d'un filtre à usage unique à une conduite d'entrée transportant une poussière fine d'un appareil de filtrage, **caractérisé par** un tube plongeant (7) raccordé à la conduite et prolongeant la conduite, qui est réglable en hauteur dans la direction de son axe en particulier vertical et qui présente sur son côté inférieur une arête de coupe (9) destinée à trancher une face, en particulier une feuille ou une membrane, recouvrant l'espace intérieur du filtre, en particulier l'ouverture supérieure du filtre, dans lequel le tube plongeant (7) pénètre dans sa position basse dans l'espace intérieur du filtre au moins sur une partie de sa longueur et se trouve dans sa position haute à l'extérieur du filtre, de telle manière que le filtre soit remplaçable.

2. Dispositif selon la revendication 1, **caractérisé en ce que** l'appareil de filtrage présente une face de recouvrement supérieure horizontale (2), qui est percée par au moins une poignée (11), qui est fixée au tube plongeant (7) pour le réglage en hauteur manuel du tube plongeant.

3. Dispositif selon la revendication 1 ou 2, **caractérisé en ce que** la conduite transportant la poussière fine forme à son extrémité inférieure une pièce tubulaire (6), sur laquelle le tube plongeant (7) est supporté de façon coulissante en hauteur et étanche.

4. Dispositif selon la revendication 2 ou 3, **caractérisé en ce qu'**une partie (10), en particulier de forme annulaire, est saillante extérieurement sur le tube plongeant (7), sur laquelle la/les poignée(s) (11) est/sont fixée(s) par sa/leur extrémité inférieure.

5. Dispositif selon l'une quelconque des revendications 2 à 4, **caractérisé en ce que** deux poignées (11) sont fixées au tube plongeant (7) sur des côtés diamétralement opposés, en particulier sur la partie saillante (10).

6. Dispositif selon l'une quelconque des revendications 2 à 5, **caractérisé en ce que** chaque poignée (11) est reliée au tube plongeant (7) en tant que manette au moyen de deux tiges de guidage verticales (12).

7. Dispositif selon la revendication 6, **caractérisé en ce que** chaque tige de guidage est montée de façon glissante dans la face de recouvrement (2).

8. Dispositif selon l'une quelconque des revendications 2 à 7, **caractérisé en ce que** la face de recouvrement (2) est une tôle pliée en forme d'U en coupe verticale avec une face supérieure (3) et des branches (4) orientées latéralement vers le bas, dans lequel la largeur (B) de la face (3) est plus grande que la hauteur (H) des branches (4).

9. Procédé d'utilisation d'un dispositif selon l'une quelconque des revendications précédentes, **caractérisé en ce qu'**après le retrait du tube plongeant (7) hors de l'ouverture supérieure du filtre, l'ouverture du filtre est fermée avec un autocollant.
